# EUROPEAN PATENT SPECIFICATION

(11) **EP 3 636 685 B1**
(45) Date of publication and mention of the grant of the patent: **07.08.2024**
(21) Application number: 18460079.9
(22) Date of filing: 18.12.2018
(51) Int. Cl.: C08G 18/36, C08G 18/64, C08G 18/76, C08L 17/00, C08L 75/04, C08L 95/00

(54) **POLYMER MODIFIED BITUMEN, METHOD FOR PREPARATION OF POLYMER MODIFIED BITUMEN AND MODIFYING AGENT FOR BITUMEN**
POLYMERMODIFIZIERTES BITUMEN, VERFAHREN ZUR HERSTELLUNG VON POLYMERMODIFIZIERTEM BITUMEN UND MODIFIZIERUNGSMITTEL FÜR BITUMEN
BITUME MODIFIÉ PAR DES POLYMÈRES, PROCÉDÉ DE PRÉPARATION DE BITUME MODIFIÉ PAR DES POLYMÈRES ET AGENT DE MODIFICATION POUR BITUME

(30) Priority: 08.10.2018 PL 42734718
(43) Date of publication of application: 15.04.2020
(73) Proprietor: Politechnika Gdanska, 80-233 Gdansk (PL)
(72) Inventor: Sienkiewicz, Maciej, 80-034 Gdansk (PL); Janik, Helena, 80-287 Gdansk (PL); Borzedowska-Labuda, Kaja, 84-207 Bojano, (PL)
(74) Representative: Pawlowska-Bajerska, Justyna

(56) References cited:
- US-B1- 6 271 305
- US-B2- 6 538 060
- B. SINGH ET AL: "Bituminous polyurethane network: Preparation, properties, and end use", JOURNAL OF APPLIED POLYMER SCIENCE, vol. 101, no. 1, 5 July 2006 (2006-07-05), US, pages 217 - 226, XP055635932, ISSN: 0021-8995, DOI: 10.1002/app.23198
- CUADRI A A ET AL: "Isocyanate-functionalized castor oil as a novel bitumen modifier", CHEMICAL ENGINEERING SCIENCE, OXFORD, GB, vol. 97, 3 May 2013 (2013-05-03), pages 320 - 327, XP028562393, ISSN: 0009-2509, DOI: 10.1016/J.CES.2013.04.045
- SUWAT RATTANAPAN: "Preparation and Properties of Bio-Based Polyurethane Foam Prepared from Modified Natural Rubber and Poly([epsilon]-caprolactone)", POLYMERS. UNIVERSITÉ DU MAINE ENGLISH, 27 June 2016 (2016-06-27), pages 1 - 176, XP055636344, Retrieved from the Internet <URL:https://tel.archives-ouvertes.fr/tel-01476202/document> [retrieved on 20191028]
- SHENG XIAOHUI ET AL: "Preparation, properties and modification mechanism of polyurethane modified emulsified asphalt", CONSTRUCTION AND BUILDING MATERIALS, ELSEVIER, NETHERLANDS, vol. 189, 10 September 2018 (2018-09-10), pages 375 - 383, XP085509821, ISSN: 0950-0618, DOI: 10.1016/J.CONBUILDMAT.2018.08.177

## Description

The invention relates to method for preparation of polymer modified bitumen, being modified by physical and chemical methods modified in such a way that it is stable under storage at high-temperature and method for its preparation. The invention relates to a polymer obtained by the method..

The popular way of improving performance and quality of bitumen is its modification by using as a modifying agent - polymers. Nowadays, polymer modifiers which are used in the industrial scale include chemical modifiers (epoxy resins or compounds with reactive isocyanate groups, such as diisocyanates, polyisocyanates, and urethane prepolymers) and physical modifiers, mostly copolymer styrene-butadiene-styrene (SBS) and copolymer ethylene-vinyl acetate. Due to economic reasons, bitumen manufacturers also use as bitumen modifiers waste polymers from the recycling process. Mainly, these are waste rubber from the recycling of car tires.

US4069182, US4021393, US4085078, US3919148 and US3844668 disclose polymer modified bitumen, that is obtained by blending heated to a temperature in the range 150-260°C bitumen with various types of rubber granulate, produced by shredding of postconsumer car tires, used in the amount variable in the range 2-15% wt. Bituminous pavements prepared from polymer modified bitumens obtained according to the methods are characterized by improved physical-mechanical properties, increased elasticity, abrasion resistance, improved rutting and low-temperature cracking resistance, compared to neat bitumen. Major disadvantages of this binders are high viscosity, which with addition of waste rubber in the amount above 15% wt. exceed 1 Pas at 180°C and lack of high-temperature storage stability (above 180°C).

Document WO2007068990 discloses method of bitumen modification by shredded waste rubber, makes it possible to obtain bitumen-rubber binders characterized by reduced viscosity and hot storage stability. The method of preparation stable bitumen binders modified by rubber granulate, according to the invention is characterized in that macromolecular polyolefins in the amount of 0,03-4,0% wt., which previously were treated with chemical conversion and contain highly polar groups (proton acceptors) are added to bitumen heated to 70-230°C These compounds shall act as dispersing agent, which provide dissolution of asphaltenes, resins and paraffin components of bitumen, and due to the presence of sulfur in their structure and under their influence, the formation of chemical bonds between rubber granulate and bitumen components occurs. Also, it contains 0,01% to 4% wt. of a mixture of medium molecular weight polyolefins, paraffin, and copolymer functionalized by carboxylic groups, whose task is a reduction of bitumen binder viscosity and causing its crosslinking. Moreover, bitumen binder prepared according to the invention may contain at least 2% wt. of antioxidants and anti-corrosive agents. After mixing these compounds with bitumen, 3% to 40% wt. of rubber granulate (size of grains 1-4 mm) are added and composition is blending for 0,5-8 hours in high-temperature between 190-270°C, in order to allow carrying out the process of rubber degradation. Then obtained composition is cooled to a temperature between 160-190° and is mixed by a shearing mixer for 0,25-4 hours and after that, it is diluted with pure bitumen, so as to amount of rubber granulate in composition was 2-30% wt. In the final stage obtained polymer modified bitumen is blending for another 0,25-2 hours. The main drawback of this solution is a preparation of polyolefin modifiers in very complex and high-temperature process. Moreover, to obtain stable polymer modified bitumen long time (at least a few hours) and very high temperature (above 200°C) of modification is required.

The method of production of devulcanized rubber with using an extruder and other mixing devices such as Z-blade mixers or ball mills is disclosed in document WO2009019684. In presented solution mineral oils (engine oils) or waste from the processing of vegetable and animal oils (mainly in the form of fatty acids obtained in the process of hydrolysis of these oils) were used as a swelling agents, plasticizers and devulcanization promoting agents. Devulcanization process is carried out in the presence of inhibitors of radical reaction (bis-phenols) and metal oxides, used to neutralize sulfur released in the rubber devulcanization process. In accordance with data presented, devulcanized obtained with this method may be used as a bitumen modifier, however, their influence on bitumen properties are not disclosed.

Polish patent application 408012 discloses a method of "soft" devulcanization of rubber granulate, which runs in a controlled way and enables the use of obtained devulcanized rubber in bitumen modification. Described "soft" devulcanization of rubber granulate rely on mixing of rubber granulate ( size of grains 1-1,5 mm) in the amount of 15-15% wt. with rapeseed oil in the amount of 0,5-5% wt. (these amounts were calculated on the weight of bitumen-rubber binder), obtained a modifying agent. This oil-rubber composition is left for 18-26 hours at temperature 15-30°C for swelling rubber with oil and after that this composition is added to bitumen used in the amount of 70-90% wt. at a temperature in the range of 180-200°C and the mixture is blended at this temperature for 1 hour. Bitumen binders obtained according to this invention are characterized by lower penetration, higher softening point compared to neat bitumen and relatively low viscosity, which is a result of the use of rubber swelled with vegetable oil. The patent description doesn't provide information about the stability of this type bitumen-rubber binder.

Use of devulcanized rubber in bitumen modification was also disclosed in documents WO1994014896 and EP2987820. Described compositions made of bitumen and devulcanized rubber, obtained by thermo-mechanical devulcanization of shredded waste tires in a twin screw extruder. This composition may also contain thermoplastic elastomers (polystyrene copolymers, mainly copolymer SBS) and plastomcrs (polyolefins and copolymers ethyleneacrylate or ethylene and poly(vinyl acetate)), and softeners and plasticizers such as oils (mineral, synthetic, natural). Due to mixing of these modifiers with bitumen, obtained bitumen binders are characterized by resistance to low-temperature cracking (to about -40°C ) and a high softening point(to about 130°C) and also high viscosity (5,2-22,0 Pas at 185°C), which allows to their application in the production of roofing membranes, hydro isolations and sealant. The major drawback of this invention is very high viscosity of bitumen-rubber binders, which practically makes it impossible to use these binders in road and bridge pavements.

Document US6271305 discloses chemical cured, elastomeric polyurethane-bitumen composition, in the form of interconnected networks of bitumen (naphthenic bitumen, coal tar, bitumen modified by waste rubber, polyethylene, polypropylene, polystyrene or rubbers) and polyurethane, synthesized in situ in bitumen material. A number of polyurethane-bitumen compositions are disclosed, which are obtained for example from bitumen with penetration grade in the range 16-195 [0,1 mm], which at temperature 90-180°C is mixed with polymeric 4,4'- diphenylmethane diisocyanate (PMDT) and various types of mixtures made up of aminolow molecular weight chain extenders and oligo(oxypropylene)diol (PPG), oligo(oxyethylene)diol (POE), oligo(oxytetramethylene)diol (PTMG), hydroxytelechelic oligobutanediol or oligodiol synthesized from castor oil and other vegetable oils. However, it should be underlined that castor oil in this invention is a component used to a synthesis of oligodiol, which in next stage is used to a synthesis of the urethane prepolymer, which acts as a bitumen modifier. In case of bitumen modified by polyurethanes and shredded waste rubber, a method of its production according to this invention in the first stage is to preparation reactive mixture of B-component including selected oligodiols, chain extenders and catalysts and C-component which is a polymeric 4,4'- diphenylmethane diisocyanate (PMDI). Reactive compositions so obtained are added to A-component, which contains bitumen and shredded waste rubber in the form of rubber granulate and immediately applied on roofs or building walls, on which take place hardening of polyurethane-bitumen compositions. According to the guidance of the author the best processing properties and performance and shortest time of gelation and hardening at 50 seconds, exhbits composition prepared with 50% wt. of bitumen modified by rubber granulate (Bitumer Inc), 30% wt. polymeric PMDI (BASF) and 36% wt. oligo(oxypropylene)diol (BASF) mixed with 0,07% wt. dibutyltin dilaurate (Air Products). As crosslinking agents are used 4% wt. equimolar mixture of 3,5-dimethylthio-2,4-toluenediamine and 3,5-dimethylthio-2,6-toluenediamine (Albemarle Corporation). The main advantage of this material is the possibility of wide application in the form of elastomericbitumen roof covering or materials for impregnation of the walls and foundations of the buildings. The process of bitumen modification takes place by using a modifying agent in the form of multi-component polymer and rubber-bitumen systems, which have to be mixed directly before application, in well-defined weight proportions, which in industrial scale requires using complicated, expensive and mobile devices, which provide mixing and dosing and also professional service is needed. Getting a binder with complex physicomechanical properties also requires additional use of amine crosslinking agent for urethane prepolymers, which are corrosive and pose a threat to the natural environment. Another drawback is getting a crosslinked binder as a result of mixing all of the components, which has short application time (gelation and initial hardening occurs within 50 s. of mixing all components). Therefore, polyurethane-bitumen binder after mixing all of the components and mixing this with mineral aggregate has a very short time of use. This completely limits its use in the construction of road pavements, except for minor repairs of cavities in bitumen pavements, using a dosingmixing mobile device. Moreover shall be indicated that content of polyurethane in binders with the best properties, must reach 50% of its weight, which significantly increases the cost of its production, in relation to other known polymer-bitumen binders, in which rubber granulate and other types of polymers (SBS, EVA) are used as a bitumen modifiers. In this invention, as a bitumen modifier, unprocessed rubber granulate is used, which significantly limits its mixing with bitumen. Unprocessed rubber granulate cause also high-viscosity of obtained binders, which significantly limits the range of its use and possibility of storage and transport.

Document US7732510 discloses method of preparation humidity crosslinked polymer-bitumen binder, obtained as a result of bitumen modification by elastomers in the form of butadiene-styrene rubber SBR or copolymer SBS, or rubber granulate, and then mixing modified binder with phenol-formaldehyde resin (use as an activator), mineral or soybean oil (use as a activator carrier and viscosity reducing agent) and crosslinking agent in the form of air humidity hardening polyurethane prepolymer containing bis(4-isocyanatophenyl)mclhane. According to the disclosed method of modification process, in the first stage is to mixing of bitumen modified by elastomer (SBR, SBS or rubber granulate) with activator. Then to this binder, heated to 25-220°C with continuous mixing, compounds with free isocyanate groups (NCO) are added. The binders obtained this way, after mixing with mineral aggregate and applications on the road surface are crosslinked by air humidity. Because of it, bitumen binder is showing a high degree of hardening and good resistance to fuels and aromatic solvents. Therefore this binder is dedicated to the construction of pavements in a gas station and fuel warehouses. It should be underlined that the essence of this invention is method of preparation polymer-bitumen binder with a high degree of crosslinking, which results in good fuel resistance. While the use of waste rubber as a bitumen modifier is optional, and most importantly they are used in the form of unprocessed rubber granulate, which considerably increases the viscosity of the binders and thus these type binders are unstable under hot storage and transport at a temperature above 160°C. Moreover, in these binders, phenol-formaldehyde resins as an activator are used, which react with compounds containing NCO groups. Crosslinking process of these binders begins at the stage of their preparation and activator structure encourages the formation of the high-density polymer network in the bitumen matrix, which causes an increase of binder viscosity. Moreover, storage and transport of this binder at room temperature require its protection against moisture. While storage of this binder at high-temperature (about 160-200°C) it is difficult, due to the possibility of uncontrolled increase of its viscosity under the influence of crosslinking reaction, occurring between compounds containing NCO groups and phenol-formaldehyde activator. Therefore the application of this binder must take place after its preparation.

Well known are polymer modified binders with waste rubber, including reclaimed rubber obtained as a result of thermal or thermo-mechanical devulcanization of waste rubber. Bitumen modification by rubber granulate enables to obtain a binder with enhanced elasticity properties, however, these binders are unstable and show high viscosity. While bitumen modification by reclaimed rubbers or reclaimed rubbers, which additionally were plasticized with aromatic, naphthenic or natural oils lead to preparation of polymer modified binders which show stability during hot storage and transport at high-temperature (above160°C), however this type of modification results in only slight improvement of bitumen properties or even their deterioration for example increased of penetration, decreased of softening point, weaker elastic and rheological properties. It is the result of loosening the cross-linked rubber structure in the devulcanization process, and thus loss of elastic properties.

On the other hand, the method of bitumen modification according to the invention, enables physicomechanical, elastic and rheological properties of bitumen modified by oil-rubber compositions to be improved, due to additional crosslinking process provided just during the method of modification and being caused by compounds containing in their structure isocyanate groups, which react with reactive groups NH₂, NH, OH, SH i COOH present in bitumen components, but also with reactive groups present in waste rubber and with hydroxyl groups present in castor oil, used in the process of obtaining oil-rubber compositions.

The invention relates to method for preparation of polymer-bitumen wherein In first step, the bitumen modifier, in the form of oil-rubber composition is obtained by mixing oil with waste rubber particle in selected amounts. In the next stage the oil-rubber composition is mixed with bitumen in the selected amounts and temperature. In the last stage, mixture of bitumen and oil-rubber modifier is mixed with a crosslinking agent in selected amounts and temperature

The invention is as defined in the claims.

The improving part according to the invention is using to selected modifying agent for bitumen modification - modifier or modifying agent in the form of kit - 3-components system, in the form of oil-rubber composition and crosslinking component - crosslinking agent containing free isocyanate groups, which chemically react with each other in bitumen. The components in the modifying agent have strictly defined tasks: oil-rubber composition gives bitumen elastic properties, and due to its preparation by thermal or thermo-mechanical devulcanization of waste rubber softening by castor oil, are characterized by better mixability with bitumen, in comparison with rubber granulate. Moreover, oil-rubber composition does not cause rapid growth of the binder viscosity, when the amount of waste rubber in bitumen increases, thereby it is possible to use above 15% wt. of waste rubber in bitumen modification.
Castor oil is used as a rubber granulate plasticizer and to decrease bitumen viscosity at the stage of its mixing with oil-rubber composition, moreover, due to present in its structure hydroxyl groups, reactive to isocyanate groups is chemically bonded with crosslinking agent, containing in its structure isocyanate groups (NCO).
Crosslinking component, containing in their structure free isocyanate groups (such as diisocyanate, polyisocyanate and urethane prepolymers), which due to high reactivity are able to form in the bitumen polymer network, through their reaction with reactive groups: NH₂, NI-I, OH, SH and COOH present in bitumen components, and with reactive groups present in rubber modifier and with hydroxyl groups present in castor oil. Moreover, isocyanate crosslinking agents have the function to adjust binder viscosity, and also by formation of the polymer network, bonded with bitumen structure, they provide stability of the rubber-bitumen binders, in storage at a temperature no higher than 180°C. It is very important to use as a crosslinking agents diisocyanate, polyisocyanate and urethane prepolymers stable at modification temperature i.e. 180°C.

According to the invention, bitumen modification by waste rubber is to formation in situ in bitumen modification process, polymer network combining bitumen components with waste rubber. Chemical bonding of rubber waste swelled with castor oil with bitumen according to the invention, occurs via extremely reactive isocyanate groups, present in compounds such as: diisocyanate, polyisocyante and urethane prepolymers, which react with amino (NH₂, NH), thiol (SH), carboxyl (COOH) and hydroxyl (OH) groups present in bitumen components and with reactive groups present in waste rubber (NH₂, NH, SH and COOH) and also with hydroxyl groups (-OH) present in castor oil.

Polymer modified bitumen obtained as a result of bitumen modification by modifier - oil-rubber composition and crosslinking by diisocyanate, according to the invention are characterized by improved properties, compared with neat bitumen and bitumen modified by un-processed rubber granulate such as: low viscosity, high elasticity, resistance to high-temperature and reduced sensitivity to temperature, reduced tendency to permanent deformation and most importantly hot storage stability at temperature 180°C, improved physico-mechanical and rheological properties and better performance, compared with known bitumen modified by shredded waste rubber or reclaimed rubber. Polymer modified bitumen obtained according to the invention may be used as binder in bitumen-aggregate mixture, intended for road construction with high durability and elasticity, also may be used for roofing membranes, sealant and insulating materials.

The invention is presented in the examples described below, while additional some examples e.g. example 5-8 were shown as a comparative examples that described another possible variant of the method where mixture of bitumen and crosslinking agent is mixed with oil-rubber composition. According to the invention mixture of bitumen and oil-rubber composition is mixed with crosslinking agent.

### Example 1.

In example 1. bitumen modified with oil-rubber composition and crosslinked by diisocyanate was obtained by using:
- bitumen 70/100, which penetration at 25°C is in the range 70-100 [0,1 mm], for example manufacturer LOTOS Asfalt Sp. z o. o.,
- rubber granulate, obtained by shredding of post-consumer rubber products, especially car tires, with grain size below 1 mm, for example manufacturer Gumeko Sp. z o.o.,
- castor oil, characterized by viscosity at 20°C in the range 950-1100 mPas, acid value equals 1,23 mgKOH/g, hydroxyl value equals 163,9 mgKOH/g, iodine value equals 85,7 g I₂/100g, for example manufacturer Brenntag Polska Sp. z o.o.
- liquid at room temperature bis(4-isocyanatophenyl)methane modified by carbodiimide (liquid-MDI) for example trade name Ongronat 3800, manufacturer Borsodchem, containing free isocyanate groups in the range 27-28% wt.,

The method for preparation of bitumen modified by oil-rubber composition (obtained by periodic method) and crosslinked by diisocyanate, according to example 1, included three stages:
In the first stage bitumen modifier in the form of oil-rubber composition is obtained. Oil-rubber composition in the amount of 250 g. was obtained by periodic method, using Z- blade mixer Brabender with capacity of mixing chamber about 200 cm³. in order to obtain this composition a conventional mechanical mixer was used, e.g. a paddle mixer, a mixture consisting of 225g of a rubber granulate, which was 90% wt. of mixture and 25 g. of a castor oil, which was 10% wt. of mixture, was made first. Mixing process of rubber granulate with oil continued until complete wetting of rubber granulate by oil, which lasted less than 10 minutes. Next this mixture was dosed to mixing chamber of oil-heated Z-blade mixer and everything was mixed at rotational speed of the mixing rotors in the range from 40 to 150 rpm and maintaining the temperature of 180±5°C, and the time of mixing was 30 minutes. Oil-rubber composition obtained in this stage was in the form of plasticized mass and was characterized by density equals 1,03g/cm³ and contant of parts insoluble in toluene of 70 % wt.

In the second stage obtained oil-rubber composition in the amount of 49,5g, which was 9,9% wt. (calculated on the weight of polymer modified bitumen) was mixed with heated to 180°C liquid bitumen used in the amount of 445,5 g, which was 89,1% of final weight of polymer modified bitumen. Process of blending bitumen with oil-rubber composition was carried out at a temperature 180±5°C, using a laboratory homogenizer, which allowed shear mixing for example IKA T50 basic ULTRA-TURRAX, with mixing rotor type M1 (S 50 N - G 45 M). Time of blending oil-rubber composition with bitumen, in the second stage was no more than 5 minutes from adding modifier to the bitumen, at rotational speed of mixing rotors of 4000 rpm.

In the third stage of bitumen modification, according to the invention, to mixture of oil-rubber composition and bitumen heated to 180±5°C, third component of modifier, in the form of crosslinking agent - bis(4-isocyanatophenyl)methane modified by carbodiimide (liquid MDI) was added. Diisocyanate was added in the amount of 5g, which was 1,0% wt. (calculated on the weight of polymer modified bitumen), after 5 minutes from adding oil-rubber composition to bitumen. Adding of crosslinking agent to bitumen took place with intense mixing at temperature 180±5°C, using a laboratory homogenizer, which allowed shear mixing for example IKA T50 basic ULTRA-TURRAX, with mixing rotor type M1 (S 50 N - G 45 M), at rotational speed of mixing rotors of 4000 rpm.

Mixing was carried out for another 55 minutes, so total time of bitumen modification by oil-rubber composition and diisocyanate did not exceed 60 minutes.

Binder obtained in this way, may be used in the process of production bituminous mixtures for road construction or may be used for roofing membranes, sealants and insulating materials. Properties and test results of hot storage stability of the binder obtained in the example 1. are presented in table 1.

### Example 2.

The method for preparation of the polymer modified bitumen, according to example 2 was carried out in the same manner, in three stages and using the same materials as described in example 1, except that, in the first stage, the time of mixing castor oil with rubber granulate in Z-blade mixer Brabender was 60 minutes. While in the second stage of bitumen modification oil-rubber composition from example 1. was used in the amount of 98,5 g, which was 19,7% wt. of polymer modified bitumen. In the second stage, this composition was mixed with the liquid bitumen heated to 180±5°C, used in the amount of 420 g, which was 84,0% wt. of polymer modified bitumen. The process of bitumen modification was carried out in the same way as in the example 1., except that bis(4-isocyanatophenyl)methane modified by carbodiimide (Ongronat 3800) in the amount of 6g., which was 1,2% wt. of polymer modified bitumen, was added to mixture of bitumen and oil-rubber composition. The process of mixing bitumen with an oil-rubber composition and diisocyanate was carried out in the same way, at the same temperature and using the same mixing device as in example 1. Properties and test results of hot storage stability of the binder obtained in the example 2. are presented in table 1.

### Example 3.

The method for preparation of the polymer modified bitumen, according to example 3 was carried out in the same manner, in three stages and using the same materials as described in example 1, except that, in the first stage, the time of mixing castor oil with rubber granulate in Z-blade mixer Brabender was 10 minutes, at temperature180±5°C. While in the second stage of bitumen modification oil-rubber composition from example 1. was used in the amount of 74 g, which was 14,8% wt. of polymer modified bitumen. In the second stage, this composition was mixed with the liquid bitumen heated to 180±5°C, used in the amount of 393,5g, which was 78,7% wt. of polymer modified bitumen. The process of bitumen modification was carried out in the same way as in the Example 1., except that bis(4-isocyanatophenyl)methane modified by carbodiimide (Ongronat 3800) in the amount of 8g., which was 1,6% wt. of polymer modified bitumen, was added to mixture of bitumen and oil-rubber composition. The process of mixing bitumen with an oil-rubber composition and diisocyanate was carried out in the same way, at the same temperature and using the same mixing device as in example 1. Properties and test results of hot storage stability of the binder obtained in the example 3. are presented in table 1.

### Example 4.

The method for preparation of the polymer modified bitumen, according to example 4 was carried out in the same manner, in three stages and using the same materials as described in example 1, except that in the second stage of bitumen modification oil-rubber composition from example 1. was used in the amount of 97 g, which was 19,4% wt. of polymer modified bitumen. In the second stage, this composition was mixed with the liquid bitumen heated to 180±5°C, used in the amount of 388,Sg, which was 77,7% wt. of polymer modified bitumen. The process of bitumen modification was carried out in the same way as in the Example 1. , except that bis(4-isocyanatophenyl)methane modified by carbodiimide (Ongronat 3800) in the amount of 14,5g., which was 2,9% wt. of polymer modified bitumen, was added to mixture of bitumen and oil-rubber composition. The process of mixing bitumen with an oil-rubber composition and diisocyanate was carried out in the same way, at the same temperature and using the same mixing device as in the example 1. Properties and test results of hot storage stability of the binder obtained in the example 4. are presented in table 1.

### Example 5

To obtain bitumen modified by oil-rubber composition and crosslinked by diisocyanate, in the example 5, using the same materials as described in the example 1., however the method for its preparation in the second and third stages was different. The method for preparation bitumen modified by oil-rubber composition and crosslinked by diisocyanate, according to example 5, included three stages:
In the first stage, oil-rubber composition was prepared by periodic method, in the same way as described in the example 1.
In the second stage, to bitumen heated to 180±5°C, used in the amount of 445,5g, which was 89,1% wt. of polymer modified bitumen, crosslinking agent (liquid-MDI) for example trade name - Ongronat 3800 (Borsodchem) in the amount of 5,0g, which was 1,0%wt. of polymer modified bitumen, was added. Adding of crosslinking agent to bitumen took place with intense mixing, using a laboratory homogenizer, which allowed shear mixing for example IKA T50 basic ULTRA-TURRAX, with mixing rotor type M1 (S 50 N - G 45 M). Mixing of the bitumen with liquid crosslinking agent was carried out at temperature 180±5°C, no longer than 5 minutes from adding crosslinking agent to bitumen, at rotational speed of mixing rotor of 4000 rpm.
In the third stage of bitumen modification in example 5, to mixture of bitumen and crosslinking agent (liquid-MDI) at temperature 180±5°C oil-rubber composition in the amount of 49,5g, which was 9,9% wt. of polymer modified bitumen, was added. Oil-rubber modifier was added after 5 minutes of mixing bitumen with crosslinking agent (liquid-MDI). Adding of oil-rubber composition to bitumen took place with intense mixing at temperature 180±5°C, using a laboratory homogenizer, which allowed shear mixing for example IKA T50 basic ULTRA-TURRAX, with mixing rotor type M1 (S 50 N - G 45 M). Mixing was carried out at rotational speed of mixing rotor of 4000 rpm, for another 55 minutes, so total time of bitumen modification by oil-rubber composition and diisocyanate did not exceed 60 minutes. Properties and test results of hot storage stability of the binder obtained in the example 5. are presented in table 1.

### Example 6.

The method for preparation of the polymer modified bitumen, according to example 6 was carried out in the same manner, in three stages and using the same materials as described in example 5, except that, in the second stage of bitumen modification, to bitumen heated to 180±5°C, used in the amount of 420 g., which was 84,0% wt. of polymer modified bitumen, crosslinking agent (liquid-MDI) for example trade name - Ongronat 3800 (Borsodchem) in the amount of 6,0 g, which was 1,2% wt. of polymer modified bitumen, was added and the whole was homogenized in the same way, at the same temperature and time, and using the same mixing device as in example 5. While in the third stage bitumen modification was carried out in the same way as in the example 5, except that to mixture of bitumen and crosslinking agent, oil-rubber composition in the amount of 74,0g, which was 14,8% wt. of polymer modified bitumen, was added. Properties and test results of hot storage stability of the binder obtained in the example 6. are presented in table 1.

### Example 7.

The method for preparation of the polymer modified bitumen, according to example 7 was carried out in the same manner, in three stages and using the same materials as described in example 5, except that, in the second stage of bitumen modification, to bitumen heated to 180±5°C, used in the amount of 394,5 g., which was 78,9% wt. of polymer modified bitumen, crosslinking agent (liquid-MDI) for example trade name - Ongronat 3800 (Borsodchem) in the amount of 7,0 g, which was 1,4% wt. of polymer modified bitumen, was added and the whole was homogenized in the same way, at the same temperature and time, and using the same mixing device as in example 5. While in the third stage bitumen modification was carried out in the same way as in the example 5, except that to mixture of bitumen and crosslinking agent, oil-rubber composition in the amount of 98,5 g, which was 19,7% wt. of polymer modified bitumen, was added. Properties and test results of hot storage stability of the binder obtained in the example 7. are presented in table 1.

### Example 8.

The method for preparation of the polymer modified bitumen, according to example 8 was carried out in the same manner, in three stages and using the same materials as described in example 5, except that, in the second stage of bitumen modification, to bitumen heated to 180±5°C, used in the amount of 388,5 g., which was 77,7% wt. of polymer modified bitumen, heated to 180±5°C, crosslinking agent (liquid-MDI) for example trade name - Ongronat 3800 (Borsodchem) in the amount of 14,5 g, which was 2,9% wt. of polymer modified bitumen, was added and the whole was homogenized in the same way, at the same temperature and time, and using the same mixing device as in example 5. While in the third stage bitumen modification was carried out in the same way as in the example 5, except that to mixture of bitumen and crosslinking agent, oil-rubber composition in the amount of 97 g, which was 19,4% wt. of polymer modified bitumen, was added. Properties and test results of hot storage stability of the binder obtained in the example 8. are presented in table 1.

### Example 9.

### Testing properties of bitumens, obtained according to examples 1-8

Bitumens, obtained according to examples 1-8, were tested for their penetration according to PN-EN 1426, softening temperatures according to PN-EN 1427, stability tests according to PN-EN 13399 and viscosity tests at 180 ° C, and the results are shown in table 1 (for comparision also results for neat bitumen (70/100) and bitumen modified by unprocessed rubber granulate (polymer modified bitumen type Bitumen/CR) and bitumen modified only by oil-rubber composition without crosslinking agent (polymer modified bitumen type Bitumen/ORC) are presented in the table 1.) Based on the results, it was found that the binders obtained in Examples 1-8 may be used in the production of bituminous mixtures for road construction, or may be used in roofing membranes, sealants and insulating materials.

Results presented in the table 1. for polymer modified bitumens, obtained according to examples1-8 indicate that they are characterized by a higher softening point and lower penetration compared to neat bitumen 70/100. It is noticeable that used modifiers had significant impact on changing bitumen properties. However, used modifiers also caused increase of bitumen viscosity, compared with neat bitumen, but its value is for most of the polymers at the level which allows for trouble-free pumping and transport of polymer modified bitumen with pipelines. The use of a crosslinking agent in the form of liquid MDI also has a significant effect on improving the properties and stability of polymer modified bitumen. Compared to bitumen modified only by an oil-rubber composition (polymer modified bitumen type Bitumen/ORC), modified bitumen obtained according to the examples 1-8, are characterized by higher softening point and lower penetration, which indicate the fact that polymer network was formed in bitumen structure.

Polymer modified binder from examples 1-4 are characterized by storage stability according to 13399 (exeptions are polymer modified bitumens crosslinking by liquid MDI in the amount of 2,9 % wt.), which means that these materials after heating at temperature 180°C, for 72 hours do not show phase separation, because the difference in the softening point and penetration between the top and bottom part of the sample, after the tube test do not exceed 5°C and 9 [0,1 mm]. This proves that these binders may be stored and transported without fear of changing their properties and separating the polymer phase from the bitumen phase.

While polymer modified bitumens from examples 5-8 are stable only in case, when te oil-rubber composition is used in the amount not exceed 9,9% wt. (calculated on the weight of polymer modified bitumen). This indicates that the order in which the oil-rubber composition and diisocyanate are added, has a significant influence on the storage stability of the polymer modified bitumens, obtained according to the invention.

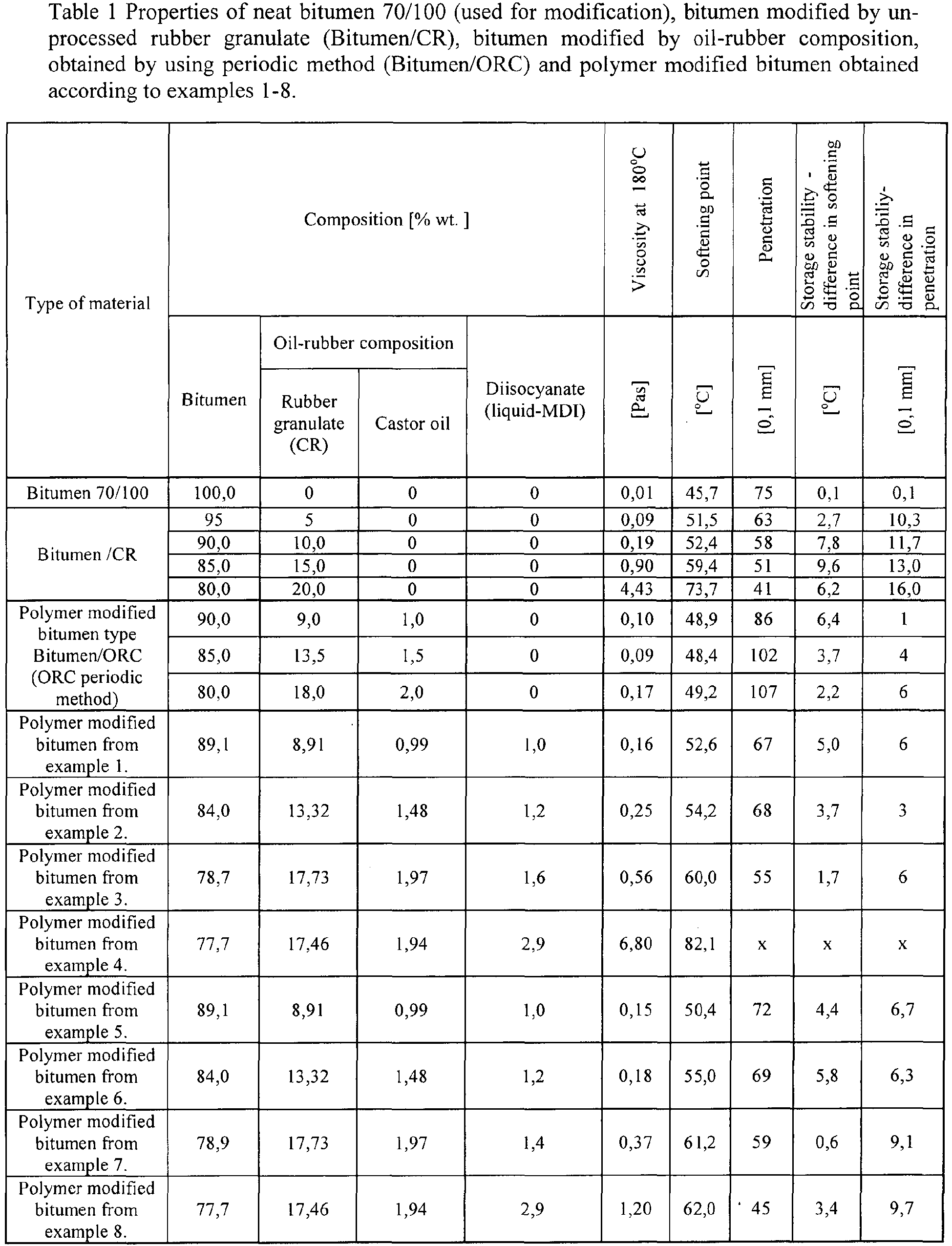

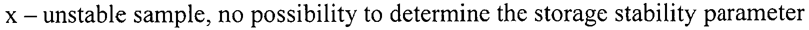

### Example 10.

To prepare bitumen modified by oil-rubber composition (obtained by continuous method) and crosslinked by diisocyanate in the example 10, the same materials as in examples 1-8 were used. The method for its preparation included three stages:
In the first stage, using continuous method with extruder, oil-rubber composition was obtained. In order to obtain this composition using conventional mechanical mixer e.g. paddle mixer, mixture consisting of 950 g. of rubber granulate, which was 95% wt. of mixture and 50g. of castor oil, which was 5% wt. of mixture, was prepared. Mixing process of rubber granulate with oil continued until complete wetting of rubber granulate by oil, which lasted 5 minutes. Next this mixture was dosed to hopper of single-screw extruder for example Brabender-Duisburg, with a screw diameter equals 20 mm and ratio LID equals 8, and in the next step, it was extruded with efficiency 120 g/min, maintaining a constant temperature in the heating zone of the plasticizing system and the extruder head on the level 180°C. Oil-rubber composition obtained in this stage was in the form of plastic extrudate after leaving the extruder head, was cooled to room temperature and shredded to the form of granulate with grain size below 1mm. Oil-rubber composition was characterized by density equals 1,08g/cm³ and contant of parts insoluble in toluene of 78 % wt.

In the second stage obtained oil-rubber composition in the amount of 25g, which was 5,0% wt. (calculated on the weight of polymer modified bitumen) was mixed with liquid bitumen, heated to 180°C, used in the amount of 473,75 g, which was 94,75 % of polymer modified bitumen. Process of blending bitumen with oil-rubber composition was carried out at a temperature 180±5°C, using a laboratory homogenizer, which allowed shear mixing for example IKA T50 basic ULTRA-TURRAX, with mixing rotor type M1 (S 50 N - G 45 M). Time of blending oil-rubber composition with bitumen, in the second stage was no more than 15 minutes, since the modifier was added to the bitumen, at rotational speed of mixing rotors of 4000 rpm.

In the third stage of bitumen modification, according to the invention, to mixture of oil-rubber composition and bitumen, heated to 180±5°C, third component of modifier, in the form of crosslinking agent - bis(4-isocyanatophenyl)methane modified by carbodiimide (liquid MDI) was added. Diisocyanate was added in the amount of 1,25g, which was 0,25% wt. (calculated on the weight of polymer modified bitumen), after 15 minutes from adding oil-rubber composition to bitumen. Adding of crosslinking agent to bitumen took place with intense mixing at temperature 180±5°C, using a laboratory homogenizer, which allowed shear mixing for example IKA T50 basic ULTRA-TURRAX, with mixing rotor type M1 (S 50 N - G 45 M), at rotational speed of mixing rotors of 4000 rpm.

Mixing was carried out for another 45 minutes, so total time of bitumen modification by oil-rubber composition and diisocyanate did not exceed 60 minutes.

Binder obtained in this way, may be used in the process of production bituminous mixtures for road construction or may be used for roofing membranes, sealants and insulating materials. Properties and test results of hot storage stability of the binder obtained in the example 10. are presented in table 2.

### Example 11.

The method for preparation of the polymer modified bitumen, according to example 11 was carried out in the same manner, in three stages and using the same materials as described in example 10, except that in the first stage of bitumen modification, the temperature in the heating zone of the plasticizing system and the extruder head was maintained at 200°C.

While in the second stage of bitumen modification oil-rubber composition from example 10. was used in the amount of 24,75 g, which was 4,95% wt. of polymer modified bitumen. In the second stage, this composition was mixed with the liquid bitumen heated to 180±5°C, used in the amount of 470,25g, which was 94,05% wt. of polymer modified bitumen. In the third stage the process of bitumen modification was carried out in the same way as in the example 10. , except that bis(4-isocyanatophenyl)methane modified by carbodiimide (Ongronat 3800) in the amount of 5g., which was 1% wt. of polymer modified bitumen, was added to mixture of bitumen and oil-rubber composition. The process of mixing bitumen with an oil-rubber composition and diisocyanate was carried out in the same way, at the same temperature and using the same mixing device as in example 10. Properties and test results of hot storage stability of the binder obtained in the example 11. are presented in table 2.

### Example 12.

The method for preparation of the polymer modified bitumen, according to example 12 was carried out in the same manner, in three stages and using the same materials as described in example 10., except that in the first stage of bitumen modification, the temperature in the heating zone of the plasticizing system and the extruder head was maintained at 160°C.

While in the second stage of bitumen modification oil-rubber composition from example 10. was used in the amount of 50 g, which was 10% wt. of polymer modified bitumen. In the second stage, this composition was mixed with the liquid bitumen heated to 180±5°C, used in the amount of 448,75g, which was 89,75% wt. of polymer modified bitumen. In the third stage the process of bitumen modification was carried out in the same way as in the example 10., except that bis(4-isocyanatophenyl)methane modified by carbodiimide (Ongronat 3800) in the amount of 1,25g., which was 0,25% wt. of polymer modified bitumen, was added to mixture of bitumen and oil-rubber composition. The process of mixing bitumen with an oil-rubber composition and diisocyanate was carried out in the same way, at the same temperature and using the same mixing device as in example 10. Properties and test results of hot storage stability of the binder obtained in the example 12. are presented in table 2.

### Example 13.

The method for preparation of the polymer modified bitumen, according to example 13 was carried out in the same manner, in three stages and using the same materials as described in example 10., except that in the second stage of bitumen modification oil-rubber composition from example 10. was used in the amount of 49,5 g, which was 9,9% wt. of polymer modified bitumen. In the second stage, this composition was mixed with the liquid bitumen heated to 180±5°C, used in the amount of 445,5g, which was 89,10% wt. of polymer modified bitumen. In the third stage the process of bitumen modification was carried out in the same way as in the example 10., except that bis(4-isocyanatophenyl)methane modified by carbodiimide (Ongronat 3800) in the amount of 5g., which was 1% wt. of polymer modified bitumen, was added to mixture of bitumen and oil-rubber composition. The process of mixing bitumen with an oil-rubber composition and diisocyanate was carried out in the same way, at the same temperature and using the same mixing device as in example 10. Properties and test results of hot storage stability of the binder obtained in the example 13. are presented in table 2.

### Example 14.

### Testing properties of bitumens, obtained according to examples 10-13

Bitumens, obtained according to examples 10-13, were tested for their penetration according to PN-EN 1426, softening temperatures according to PN-EN 1427, stability tests according to PN-EN 13399 and viscosity tests at 180 ° C, and the results are shown in table 2 (for comparision also results for neat bitumen (70/100) and bitumen modified by unprocessed rubber granulate (polymer modified bitumen type Bitumen/CR) and bitumen modified only by oil-rubber composition (obtained by continuous method) without crosslinking agent (polymer modified bitumen type Bitumen/ORC) are presented in the table 2.) Based on the results, it was found that the binders obtained in Examples 10-13, are characterized by improved stability, compared with bitumen modified by un-processed rubber granulate and compositions obtained using continuous method and their physico-mechanical and rheological properties indicates that these binders may be used in the production of bituminous mixtures for road construction, or may be used in roofing membranes, sealants and insulating materials.

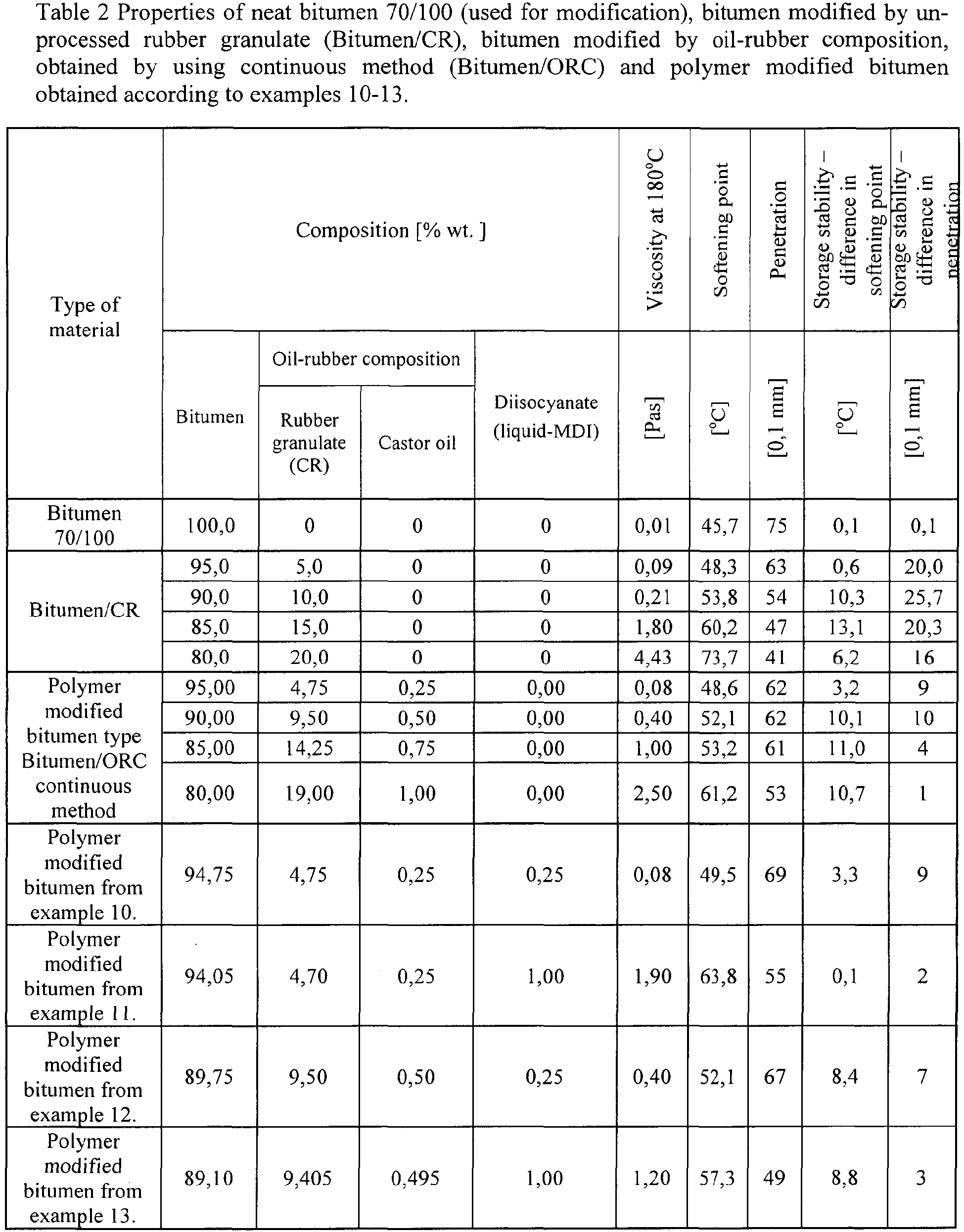

### Example 15.

To prepare bitumen modified by oil-rubber composition (obtained by continuous method) and crosslinked by urethane prepolymer in the example 15, following materials were used:
- bitumen 70/100, which penetration at 25°C is in the range 70-100 [0,1 mm], manufacturer for example LOTOS Asfalt Sp. z o. o.,
- rubber granulate, obtained by shredding of post-consumer car tires, with grain size below 1 mm, for example manufacturer Orze 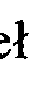 Sp. z o.o.,
- castor oil characterized by viscosity at 20°C in the range 950-1100 mPas, acid value equals 1,23 mgKOH/g, hydroxyl value equals 163,9 mgKOH/g, iodine value equals 85,7 g I₂/100g, for example manufacturer Brenntag Polska Sp. z o.o.
- liquid at room temperature bis(4-isocyanatophenyl)methane modified by carbodiimide (liquid-MDI) for example trade name Ongronat 3800, manufacturer Borsodchem, containing free isocyanate groups in the range 27-28% wt., which has thermal stability at bitumen modification temperature i.e. 180°C.
- urethane prepolymer (PRE), containing 10% wt. free isocyanate groups (NCO), synthesized using bis(4-isocyanatophenyl)methane (Ongronat 3800, manufacturer Borsodchem) and α,ω-dihydroxy[oligo(oxyterametylenu)] (for example PolyTHF2000 Polyether, manufacturer BASF) with molecular weight equals 2000 Da.

Method of preparation polymer modified bitumen according to example 15, included three stages:
In the first stage, oil-rubber composition was obtained by continuous method, in the same way as described in the example 10.

In the second stage, oil-rubber composition obtained in the first stage, in the amount of 49,75g, which was 9,95% wt. (calculated on the weight of polymer modified bitumen) was mixed with liquid bitumen, heated to 180°C, used in the amount of 447,75 g, which was 89,55 % of polymer modified bitumen. Process of blending bitumen with oil-rubber composition was carried out at a temperature 180±5°C, using a laboratory homogenizer, which allowed shear mixing for example IKA T50 basic ULTRA-TURRAX, with mixing rotor type M1 (S 50 N - G 45 M). Time of blending oil-rubber composition with bitumen, in the second stage was no more than 15 minutes from adding modifier to bitumen, at rotational speed of mixing rotors of 4000 rpm.

In the third stage of bitumen modification, to mixture of oil-rubber composition and bitumen, heated to 180±5°C, third component of modifier, in the form of crosslinking agent - urethane prepolymer was added. Prepolymer was added in the amount of 2,5g, which was 0,5% wt. (calculated on the weight of polymer modified bitumen), after 15 minutes from adding oil-rubber composition to bitumen. Adding of crosslinking agent to bitumen took place with intense mixing at temperature 180±5°C, using a laboratory homogenizer, which allowed shear mixing for example IKA T50 basic ULTRA-TURRAX, with mixing rotor type M1 (S 50 N - G 45 M), at rotational speed of mixing rotors of 4000 rpm.

Mixing was carried out for another 45 minutes, so total time of bitumen modification by oil-rubber composition and diisocyanate did not exceed 60 minutes.

Binder obtained in this way, may be used in the process of production bituminous mixtures for road construction or may be used for roofing membranes, sealants and insulating materials. Properties and test results of hot storage stability of the binder obtained in the example 15. are presented in table 3.

### Example 16.

The method for preparation of the polymer modified bitumen, according to example 16 was carried out in the same manner, in three stages and using the same materials as described in example 15., except that in the second stage of bitumen modification oil-rubber composition from example 15. was used in the amount of 49,5 g, which was 9,9% wt. of polymer modified bitumen. In the second stage, this composition was mixed with the liquid bitumen heated to 180±5°C, used in the amount of 445,5g, which was 89,1% wt. of polymer modified bitumen. In the third stage the process of bitumen modification was carried out in the same way as in the example 15., except that urethane prepolymer in the amount of 5g., which was 1% wt. of polymer modified bitumen, was added to mixture of bitumen and oil-rubber composition. The process of mixing bitumen with an oil-rubber composition and urethane prepolymer was carried out in the same way, at the same temperature and using the same mixing device as in example 15. Properties and test results of hot storage stability of the binder obtained in the example 16. are presented in table 3.

### Example 17.

The method for preparation of the polymer modified bitumen, according to example 17 was carried out in the same manner, in three stages and using the same materials as described in example 15., except that in the second stage of bitumen modification oil-rubber composition from example 15. was used in the amount of 49 g, which was 9,8% wt. of polymer modified bitumen. In the second stage, this composition was mixed with the liquid bitumen heated to 180±5°C, used in the amount of 441g, which was 88,2% wt. of polymer modified bitumen. In the third stage the process of bitumen modification was carried out in the same way as in the example 15., except that urethane prepolymer in the amount of 10 g., which was 2% wt. of polymer modified bitumen, was added to mixture of bitumen and oil-rubber composition. The process of mixing bitumen with an oil-rubber composition and urethane prepolymer was carried out in the same way, at the same temperature and using the same mixing device as in example 15. Properties and test results of hot storage stability of the binder obtained in the example 17. are presented in table 3.

### Example 18.

### Testing properties of bitumens, obtained according to examples 15-17

Bitumens, obtained according to examples 15-17, were tested for their penetration according to PN-EN 1426, softening temperatures according to PN-EN 1427, stability tests according to PN-EN 13399 and viscosity tests at 180°C, and the results are shown in table 3 (for comparision also results for neat bitumen (70/100) and bitumen modified by un-processed rubber granulate (polymer modified bitumen type Bitumen/CR) and bitumen modified only by oil-rubber composition (obtained by continuous method) without crosslinking agent (polymer modified bitumen type Bitumen/ORC) are presented in the table 3. Based on the results, it was found that the binders obtained in examples 15-17 may be used in the production of bituminous mixtures for road construction, or may be used in roofing membranes, sealants and insulating materials.

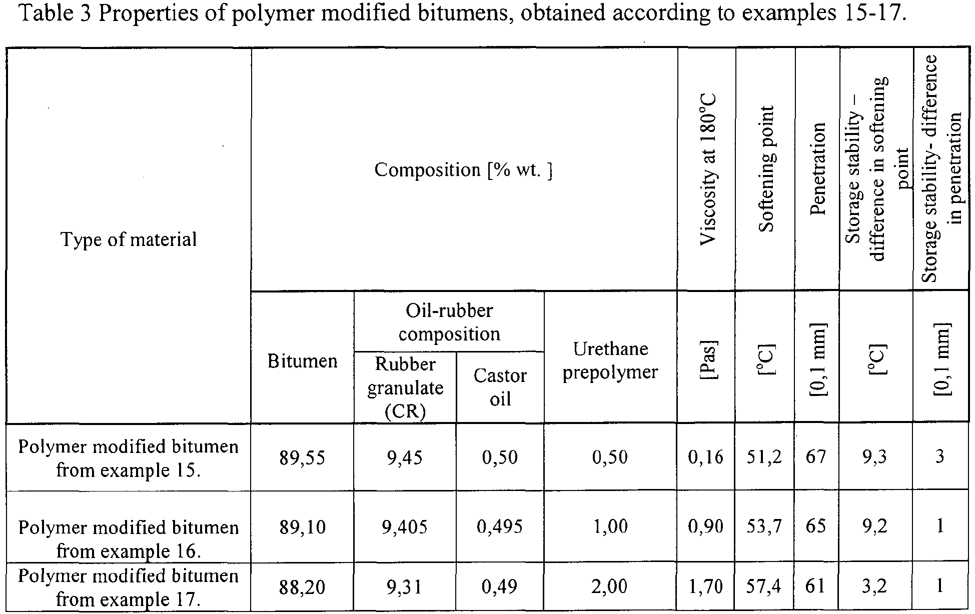

Results presented in the table 3. for polymer modified bitumens, obtained according to examples 15-17 indicate that these binders are characterized by improved hot storage stability, compared to bitumen modified by un-processed rubber granulate (tabel 1.) and bitumen modified with oil-rubber composition (obtained by using continuous method - tabel 2.) and also physico-mechanical and rheological properties indicate that it is possible to use these binders in the production of bituminous mixtures for road construction, or may be used in roofing membranes, sealants and insulating materials.

### Example 19.

The method for preparation of the bitumen modified by oil-rubber composition, obtained by using periodic static method, and crosslinkied by diisocyanate, according to example 19 the same materials as described in examples 1-8 were used. Method of preparation these polymer modified bitumens included three stages:
In first stage bitumen modifier in the form of oil-rubber composition was obtained using periodic static method. In order to obtain this composition using conventional paddle mechanical mixer in steel containers with capacity 2 dm3, mixture consisting of 950 g. of rubber granulate, which was 95% wt. of mixture and 50g. of castor oil, which was 5% wt. of mixture, was prepared. Mixing process of rubber granulate with oil was continued until complete wetting of rubber granulate by oil, which lasted 5 minutes. Next this mixture was heated at temperature 180°C for 60 minutes, mixing for about. 1 minutes at intervals of 10 minutes. Mixing was carried out with a paddle mixer at the rotational speed of the mixing rotor in the range 20-100 rpm. The oil-rubber composition obtained in this way was in the form of an oil-softened granulate.

In the second stage obtained oil-rubber composition in the amount of 74,5g, which was 14,9% wt. (calculated on the weight of polymer modified bitumen) was mixed with heated to 180±5°C liquid bitumen used in the amount of 423,5 g, which was 84,7% wt. of polymer modified bitumen. Process of blending bitumen with oil-rubber composition was carried out at a temperature 180±5°C, using a laboratory homogenizer, which allowed shear mixing for example IKA T50 basic ULTRA-TURRAX, with mixing rotor type M1 (S 50 N - G 45M). Time of blending oil-rubber composition with bitumen, in the second stage was no more than 15 minutes from adding modifier to the bitumen, at rotational speed of mixing rotors of 4000 rpm.

In the third stage of bitumen modification, according to example 19, to mixture of oil-rubber composition and bitumen, heated to 180±5°C, third component of modifier, in the form of crosslinking agent - bis(4-isocyanatophenyl)methane modified by carbodiimide (liquid MDI) was added. Diisocyanate was added in the amount of 2 g, which was 0,4% wt. (calculated on the weight of polymer modified bitumen), after 15 minutes from adding oil-rubber composition to bitumen. Adding of crosslinking agent to bitumen took place with intense mixing at temperature 180±5°C, using a laboratory homogenizer, which allowed shear mixing for example IKA T50 basic ULTRA-TURRAX, with mixing rotor type M1 (S 50 N - G 45 M), at rotational speed of mixing rotors of 4000 rpm.

Mixing was carried out for another 45 minutes, so total time of bitumen modification by oil-rubber composition and diisocyanate did not exceed 60 minutes.

Binder obtained in this way, may be used in the process of production bituminous mixtures for road construction or may be used for roofing membranes, sealants and insulating materials. Properties and test results of hot storage stability of the binder obtained in the example 19. are presented in table 4.

### Example 20.

The method for preparation of the polymer modified bitumen, according to example 20 was carried out in the same manner, in three stages and using the same materials as described in example 19., except that in the second stage of bitumen modification oil-rubber composition from example 19. was used in the amount of 74,0 g, which was 14,8% wt. of polymer modified bitumen. In the second stage, this composition was mixed with the liquid bitumen heated to 180±5°C, used in the amount of 420,5g, which was 84,1% wt. of polymer modified bitumen. In the third stage the process of bitumen modification was carried out in the same way as in the example 19., except that bis(4-isocyanatophenyl)methane modified by carbodiimide (Ongronat 3800) in the amount of 5,5g., which was 1,1% wt. of polymer modified bitumen, was added to mixture of bitumen and oil-rubber composition. The process of mixing bitumen with an oil-rubber composition and diisocyanate was carried out in the same way, at the same temperature and using the same mixing device as in example 19. Properties and test results of hot storage stability of the binder obtained in the example 20. are presented in table 4.

### Example 21.

The method for preparation of the polymer modified bitumen, according to example 21 was carried out in the same manner, in three stages and using the same materials as described in example 19., except that in the first stage of modification, oil-rubber composition was prepared from mixture consisting of 100g castor oil and 900g rubber granulate, which were 10% wt. and 90% wt. of the composition.

While in second stage of bitumen modification oil-rubber composition from example 19. was used in the amount of 74,5 g, which was 14,9% wt. of polymer modified bitumen. In the second stage, this composition was mixed with the liquid bitumen heated to 180±5°C, used in the amount of 422g, which was 84,4% wt. of polymer modified bitumen. In the third stage the process of bitumen modification was carried out in the same way as in the example 19., except that bis(4-isocyanatophenyl)methane modified by carbodiimide (Ongronat 3800) in the amount of 3,5g., which was 0,7% wt. of polymer modified bitumen, was added to mixture of bitumen and oil-rubber composition. The process of mixing bitumen with an oil-rubber composition and diisocyanate was carried out in the same way, at the same temperature and using the same mixing device as in example 19. Properties and test results of hot storage stability of the binder obtained in the example 21. are presented in table 4.

### Example 22.

The method for preparation of the polymer modified bitumen, according to example 22 was carried out in the same manner, in three stages and using the same materials as described in example 19., except that in the second stage of bitumen modification oil-rubber composition from example 19. was used in the amount of 74,0 g, which was 14,8% wt. of polymer modified bitumen. In the second stage, this composition was mixed with the liquid bitumen heated to 180±5°C, used in the amount of 419,5g, which was 83,9% wt. of polymer modified bitumen. In the third stage the process of bitumen modification was carried out in the same way as in the example 19., except that bis(4-isocyanatophenyl)methane modified by carbodiimide (Ongronat 3800) in the amount of 6,5g., which was 1,3% wt. of polymer modified bitumen, was added to mixture of bitumen and oil-rubber composition. The process of mixing bitumen with an oil-rubber composition and diisocyanate was carried out in the same way, at the same temperature and using the same mixing device as in example 19. Properties and test results of hot storage stability of the binder obtained in the example 22. are presented in table 4.

### Example 23.

The method for preparation of the polymer modified bitumen, according to example 23 was carried out in the same manner, in three stages and using the same materials as described in example 19., except that in the first stage of modification, oil-rubber composition was prepared from mixture consisting of 150g castor oil and 850g rubber granulate, which were 15% wt. and 85% wt. of the composition.

While in second stage of bitumen modification oil-rubber composition from example 19. was used in the amount of 74 g, which was 14,8% wt. of polymer modified bitumen. In the second stage, this composition was mixed with the liquid bitumen heated to 180±5°C, used in the amount of 421g, which was 84,2% wt. of polymer modified bitumen. In the third stage the process of bitumen modification was carried out in the same way as in the example 19., except that bis(4-isocyanatophenyl)methane modified by carbodiimide (Ongronat 3800) in the amount of 5g., which was 1% wt. of polymer modified bitumen, was added to mixture of bitumen and oil-rubber composition. The process of mixing bitumen with an oil-rubber composition and diisocyanate was carried out in the same way, at the same temperature and using the same mixing device as in example 19. Properties and test results of hot storage stability of the binder obtained in the example 23. are presented in table 4.

### Example 24.

The method for preparation of the polymer modified bitumen, according to example 24 was carried out in the same manner, in three stages and using the same materials as described in example 19., except that in the first stage of modification, oil-rubber composition was prepared from mixture consisting of 200g castor oil and 800g rubber granulate, which were respectively 20% wt. and 80% wt. of the composition.

While in second stage of bitumen modification oil-rubber composition from example 19. was used in the amount of 74 g, which was 14,8% wt. of polymer modified bitumen. In the second stage, this composition was mixed with the liquid bitumen heated to 180±5°C, used in the amount of 419,5 g, which was 83,9% wt. of polymer modified bitumen. In the third stage the process of bitumen modification was carried out in the same way as in the example 19. , except that bis(4-isocyanatophenyl)methane modified by carbodiimide (Ongronat 3800) in the amount of 5g., which was 1,3% wt. of polymer modified bitumen, was added to mixture of bitumen and oil-rubber composition. The process of mixing bitumen with an oil-rubber composition and diisocyanate was carried out in the same way, at the same temperature and using the same mixing device as in example 19. Properties and test results of hot storage stability of the binder obtained in the example 24. are presented in table 4.

### Example 25.

### Testing properties of bitumens, obtained according to examples 19-24

Bitumens, obtained according to examples 19-24, were tested for their penetration according to PN-EN 1426, softening temperatures according to PN-EN 1427, stability tests according to PN-EN 13399 and viscosity tests at 180°C, and the results are shown in table 4.

Based on the results, it was found that the binders obtained in examples 19-20 may be used in the production of bituminous mixtures for road construction, or may be used in roofing membranes, sealants and insulating materials.

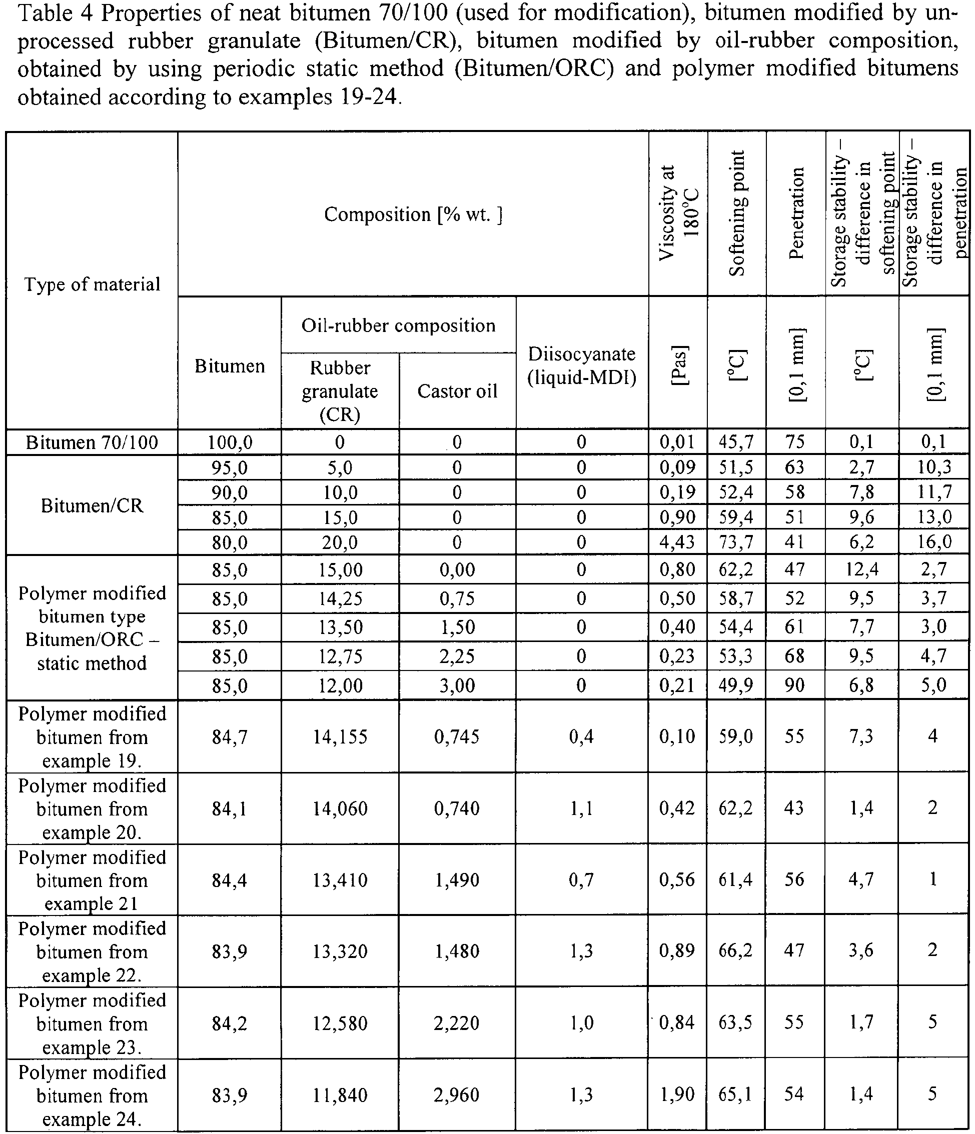

Polymer modified bitumens, which were obtained according to examples 19-24 are characterized by viscosity in the range 0,1-1,9 Pas, at temperature 180°C, and storage stability compared with bitumens modified by un-processed rubber granulate (Bitumen/CR) and bitumens modified only by oil-rubber composition (obtained using static method) and also physico-mechanical and rheological properties indicate that it is possible to use these binders in the production of bituminous mixtures for road construction, or may be used in roofing membranes, sealants and insulating materials.

## Claims

1. Method for preparation of polymer modified bitumen by modification with waste rubber, consisting of mixing of bitumen with modifier at increased temperature, **characterized in that** the method comprises three stages:
- a bitumen modifier in the form of oil-rubber composition is being obtained in the way that oil and waste rubber particle are mixed together, while in composition the amount of waste rubber is from 80% wt. to 95% wt. and the amount of oil is from 5% wt. to 20% wt.;
- the oil-rubber composition obtained in the previous stage, in the amount from 4 % wt. to 20% wt. is mixing with bitumen used in the amount from 77% wt. to 95% wt., the mixing is being performed using conventional mixing means, at temperature 175-185°C;
- in the last stage, mixture of bitumen and oil-rubber composition obtained in the previous stage, in the amount from 77% wt. to 95% wt. is mixing with crosslinking component used in the amount from 0,25% wt. to 3% wt., , the mixing is being performed using conventional mixing devices at temperature 175-185°C, further **characterized in that**:
- the waste rubber particle are obtained from recycling of post-consumer tires and are not larger than 1 mm,
- the crosslinking component contains free reactive isocyanate groups NCO in its structure,
- the oil in the oil rubber composition is castor oil.

2. The method according to claim 1, wherein oil-rubber composition is being converted by periodic static method, no longer than 60 minutes and at temperature not higher than 180°C.

3. The method according to claim 1, wherein the crosslinking agent is in a form of (4-isocyanatophenyl)methanc modified by carbodiimide.

4. The method according to claim 1, wherein the crosslinking agent contains ether-urethanen prepolymer, which comprises free isocyanate groups in the amount above 10% wt.

5. Polymer modified bitumen obtained by the method of claim 1.

## Patentansprüche

1. Verfahren zur Herstellung von polymermodifiziertem Bitumen durch Modifikation mit Altgummi das aus der Mischung von Bitumen mit einem Modifikator bei erhöhter Temperatur besteht, **dadurch gekennzeichnet, dass** das Verfahren drei Stufen umfasst:
- Ein Bitumenmodifikator in Form einer Öl-Gummi-Komposition wird dadurch erhalten, dass Öl und Altreifengummi-Partikel zusammen gemischt werden, wobei in der Komposition der Anteil von Altgummi zwischen 80% Gew. und 95% Gew. und der Anteil des Öls zwischen 5% Gew. und 20% Gew. liegt;
- in der vorherigen Stufe erhaltene Öl-Gummi-Komposition, in einer Menge von 4 % Gew. bis 20% Gew., wird mit Bitumen in einer Menge von 77% Gew. bis 95% Gew. gemischt, die Mischung erfolgt mit konventionellen Mischmitteln bei einer Temperatur von 175-185°C;
- in der letzten Stufe wird die Mischung aus Bitumen und der in der vorherigen Stufe erhaltenen Öl-Gummi-Komposition, in einer Menge von 77% Gew. bis 95% Gew., mit einer vernetzenden Komponente in einer Menge von 0,25% Gew. bis 3% Gew. gemischt, die Mischung erfolgt mit konventionellen Mischgeräten bei einer Temperatur von 175-185°C, weiter **dadurch gekennzeichnet, dass**:
- die Altgummi-Partikel aus dem Recycling von Altreifen stammen und nicht größer als 1 mm sind,
- die vernetzende Komponente freie reaktive Isocyanat-Gruppen NCO in seiner Struktur enthält,
- das Öl in der Öl-Gummi-Komposition Rizinusöl ist.

2. Das Verfahren nach Anspruch 1, wobei die Öl-Gummi-Komposition durch ein periodisches statisches Verfahren umgewandelt wird, nicht länger als 60 Minuten und bei einer Temperatur nicht höher als 180°C.

3. Das Verfahren nach Anspruch 1, wobei der vernetzende Agent in Form von 4,4'-Diphenylmethandiisocyanat, das durch e modifiziert wird Carbodiimid.

4. Das Verfahren nach Anspruch 1, wobei der vernetzende Agent ein Ether-Urethan-Präpolymer enthält, das freie Isocyanat-Gruppen in einer Menge über 10% Gew. enthält.

5. Durch das Verfahren nach Anspruch 1 erhaltenes polymermodifiziertes Bitumen.

## Revendications

1. Méthode de préparation de bitume modifié par des polymères, par modification avec des déchets de caoutchouc, consistant à mélanger le bitume avec le modificateur à une température plus élevée, **caractérisé en ce que** la méthode comprenant trois étapes :
- un modificateur de bitume sous la forme d'une composition huile-caoutchouc est obtenu en mélangeant de l'huile et des particules de caoutchouc usagé, la quantité de caoutchouc usagé étant comprise entre 80 % en poids et 95 % en poids et la quantité d'huile est comprise entre 5 % en poids et 20 % en poids ;
- la composition huile-caoutchouc obtenue à l'étape précédente, dans une proportion de 4 % en poids à 20 % en poids, est mélangée au bitume utilisé dans une proportion de 77 % en poids à 95 % en poids, le mélange étant effectué à l'aide de moyens de mélange conventionnels, à une température de 175-185°C ;
- dans la dernière étape, le mélange de bitume et de composition huile-caoutchouc obtenu à l'étape précédente, dans une proportion de 77 % en poids à 95 % en poids, est mélangé avec le composant de réticulation utilisé dans une proportion de 0,25 % en poids à 3 % en poids, le mélange étant effectué à l'aide de dispositifs de mélange conventionnels à une température de 175-185°C, **caractérisé en outre par le fait que** :
- les particules de déchets de caoutchouc sont issues du recyclage de pneus de postconsommation et ne dépassent pas 1 mm,
- le composant de réticulation contient des groupes isocyanates réactifs libres NCO dans sa structure,
- l'huile contenue dans la composition du caoutchouc gras est l'huile de ricin.

2. La méthode selon la revendication 1, dans laquelle la composition huile-caoutchouc est convertie par une méthode statique périodique, pas plus de 60 minutes et à une température ne dépassant pas 180°C.

3. Méthode selon la revendication 1, dans laquelle l'agent de réticulation est sous forme de 4-isocyanatophényl) méthane modifié par carbodiimide.

4. Méthode selon la revendication 1, dans laquelle l'agent de réticulation contient un prépolymère éther-uréthane, qui comprend des groupes isocyanates libres en quantité supérieure à 10 % en poids.

5. Bitume modifié par des polymères obtenu par la méthode de la revendication 1.
